# FASCICULE DE BREVET EUROPEEN

(11) **EP 1 450 247 B1**
(45) Date de publication et mention de la délivrance du brevet: **17.06.2009**
(21) Numéro de dépôt: 04290435.9
(22) Date de dépôt: 18.02.2004
(51) Int. Cl.: G06F 3/041, G06F 3/046

(54) **Dispositif d'interface homme machine à retour d'information tactile pour dalle tactile**
Mensch-Rechner Schnittstelle mit Kraftrückkoppelung für druckempfindliche Eingabetafel
Human-computer interface with force feedback for pressure pad

(30) Priorité: 18.02.2003 FR 0301949
(43) Date de publication de la demande: 25.08.2004
(73) Titulaire: NEXTER Electronics, 78000 Versailles (FR)
(72) Inventeur: Montels, Jean-Marc, 82370 Orgueil (FR)
(74) Mandataire: Célanie, Christian

(56) Documents cités:
- DE-U- 20 110 769
- US-A1- 2002 033 795

## Description

Le secteur technique de la présente invention est celui des interfaces homme machine, et plus particulièrement celles mettant en oeuvre des dalles tactiles avec ou sans retour visuel.

Le problème traité par la présente invention concerne plus particulièrement l'utilisation de dispositifs de type dalle tactile en environnement perturbé en terme de vibrations et de chocs tels que des postes de commandes embarqués dans des véhicules.

Le but de la présente invention est de fournir à l'opérateur d'un dispositif incorporant une interface de type dalle tactile, une interaction modale du toucher humain, sous forme d'un retour d'effort. Ce retour d'effort peut prendre au moins deux types de formes : il peut être du type « sensation vibratoire » ou du type «effet tactile ».

Ces effets biomécaniques permettent, de par leur présence, un retour d'information instantanée lors de l'appui digital sur la dalle tactile. Ces effets biomécaniques, de par leur différenciation, permettent de plus l'interprétation par l'opérateur du mode opératoire en cours.

Cette interaction supplémentaire sur le mode du toucher humain permet d'améliorer et de sécuriser l'interaction de l'homme avec le dispositif, de s'affranchir éventuellement de l'interaction visuelle, et permet des utilisation variées, y compris dans des environnements ou l'opérateur est potentiellement perturbé par des chocs ou des vibrations.

Un tel dispositif peut, comme une dalle tactile classique être complété secondairement par un écran de visualisation sur lequel vient se superposer la dalle tactile transparente. Ceci afin de compléter l'interaction multimodale, avec des informations de type visuelles.

Il est connu à ce jour des dalles tactiles de différents types. Plusieurs technologies existent et l'on peut citer les plus couramment utilisées : résistives, capacitives, continues et discontinues, infra rouge, ondes acoustiques de surface. Toutes ces technologies permettent d'assurer les fonctions de détection/identification d'un appui et de localisation bidimensionnelle de la zone d'appui du doigt de l'opérateur dans la surface plane, généralement rectangulaire, délimitée par la zone utile de la dalle tactile. De tels dispositifs sont utilisés pour le pointage et fournissent la localisation du contact du doigt de l'opérateur en coordonnées, généralement cartésiennes, X et Y. L'opérateur peut désigner un point sur toute la surface de la dalle tactile. L'unité de traitement et d'analyse se charge de localiser la position exacte du contact.

Il n'existe pas dans l'état de la technique de dispositif permettant de restituer à l'opérateur d'une dalle tactile une information de type retour d'effort, sur le mode du toucher.

Les retours d'information à l'opérateur de dalles tactiles existantes utilisent presque toujours, et de manière exclusive, le mode visuel, grâce à la superposition de la dalle tactile, au-dessus d'un écran de visualisation, la dalle tactile étant généralement réalisée transparente. Ceci nécessite de la part de l'opérateur une vision directe et combinée de l'écran de visualisation et son action d'appui sur la dalle tactile. L'opérateur est informé du résultat de son action sur la dalle tactile, par une modification de l'image présentée sur l'écran de visualisation situé sous la dalle tactile et visible en transparences pour assurer ainsi la correspondance entre l'action tactile et le retour d'information visuel.

L'inconvénient majeur de ces technologies est de ne pas pouvoir utiliser la dalle tactile pour pointer sans vision directe avec une sécurité suffisante pour éviter les "faux appuis", ou appuis à côté de la zone initialement souhaitée par l'opérateur. Les tâtonnements sont impossibles sans déclenchement de l'unité de traitement et d'analyse.

On connaît le document US-2002/0033795 qui décrit un dispositif d'interface homme machine comprenant une dalle tactile qui peut mesurer la vitesse de déplacement d'un doigt. Un actionneur permet la mise en mouvement de la dalle en fonction d'une valeur planifiée ou d'un événement. Il est indiqué dans ce document que la pression d'appui peut être ajustée pour la rendre constante.

Le document DE-20110769 décrit également une dalle sensible équipée de moyens de mise en mouvement et des moyens d'analyse de pression du type électro-aimant.

Les documents EP-0556999 et GB-2183843 décrivent un système de capture de données comprenant une surface sensible et un ensemble de détection situé en dessous afin de détecter les données correspondant à la surface sensible sur laquelle on exerce un appui.

Les documents WO 02/27645 et JP-11212725 décrivent la combinaison d'une dalle tactile sur laquelle un appui est exercé et d'une dalle piézoélectrique destinée à produire un signal résultant et dans lesquels les moyens de mesure et de mise en mouvement sont confondus.

Les applications en interface homme machine embarquées, à bord de véhicules par exemple, générant de nombreux mouvements pouvant perturber l'opérateur lors de ses interactions, demandent à combiner sur un même écran, des touches tactiles, des zones de pointage, des zones interdites aux appuis. Ces applications se compliquent encore lorsque ces zones évoluent dynamiquement dans le temps en fonction des interactions et ne sont plus uniquement statiques. C'est le cas par exemple d'une application à menu déroulant, ou d'applications interactives entre plusieurs diagrammes de visualisation. La combinaison de ces typologies de zones tactiles demande une perception ergonomique et un niveau de sécurité pour les actions opérateurs.

La présente invention remédie à ces différents inconvénients.

L'invention a donc pour objet un dispositif d'interface homme machine comprenant une dalle tactile, un moyen de mise en mouvement, un moyen de mesure de la pression, une unité d'analyse et de traitement reliée audits moyens et un corps de boîtier, une bobine traversée par du courant et solidaire du corps du boîtier, un actionneur solidaire de la dalle tactile et disposé dans l'axe de ladite bobine, des moyens de mesure du courant de ladite bobine et des moyens de commande du courant de ladite bobine, caractérisé en ce que le moyen de mise en mouvement et le moyen de mesure de la pression sont interposés entre la dalle tactile et le corps de boîtier, la dalle tactile étant mise en mouvement relativement au corps du boiter par le moyen de mise en mouvement selon une courbe déplacement en fonction de la pression d'appui mesurée par ledit moyen de mesure de la pression afin de produire sur la dalle tactile des effets détectables et différentiables au toucher, le moyen de mise en mouvement et le moyen de mesure de la pression étant confondus.

Selon une autre caractéristique de l'invention, le moyen commun de mise en mouvement et le moyen de mesure de la pression comprennent au moins un électro-aimant.

Selon encore une autre caractéristique de l'invention, le moyen de mise en mouvement déplace la dalle tactile selon une courbe déplacement en fonction du temps, sous le contrôle de l'unité d'analyse et de traitement.

Selon une autre caractéristique de l'invention, le motif de déplacement de la dalle tactile est du type «sensation vibratoire» obtenu en modulant le déplacement produit par le moyen de mise en mouvement salon une modulation d'amplitude périodique en fonction du temps.

Selon une autre caractéristique de l'invention, le motif de déplacement de la dalle tactile est du type «effet tactile» obtenu en asservissant le déplacement en fonction de l'effort selon une courbe décomposable en trois zones; une première zone où moyen de mise en mouvement exerce un effort croissant en fonction du déplacement, une seconde zone où moyen de mise en mouvement exerce un effort décroissant en fonction du déplacement et une troisième zone où moyen de mise en mouvement exerce un effort croissant en fonction du déplacement.

Selon une autre caractéristique de l'invention, l'unité d'analyse et de traitement interface la dalle tactile est configurée pour produire un motif de mise en mouvement de la dalle tactile déterminé en fonction de la zone d'appui sur la surface de la dalle tactile.

Selon une autre caractéristique de l'invention, la dalle tactile est disposée en avant d'un écran de visualisation.

D'autres caractéristiques, détails et avantages de l'invention ressortiront plus clairement de la description détaillée donnée ci-après à titre indicatif en relation avec des dessins sur lesquels :
- la figure 1 présente une vue d'ensemble du dispositif objet de la présente invention,
- la figure 2 présente la courbe (Type A) Déplacement en fonction du Temps typique du motif utilisé dans le cas du motif « sensation vibratoire »,
- la figure 3 présente la courbe (Type B) Force en fonction du Déplacement typique du motif selon laquelle est asservie la dalle tactile dans le cas du motif « effet tactile ».
- la figure 4 illustre le principe de la loi d'Ampère appliquée à un électro-aimant,
- la figure 5 présente une vue en coupe transversale d'un mode de réalisation préférentiel du dispositif objet de la présente invention.
- et les figures 6 et 7 illustrent deux exemples de réalisation utilisant la présente invention.

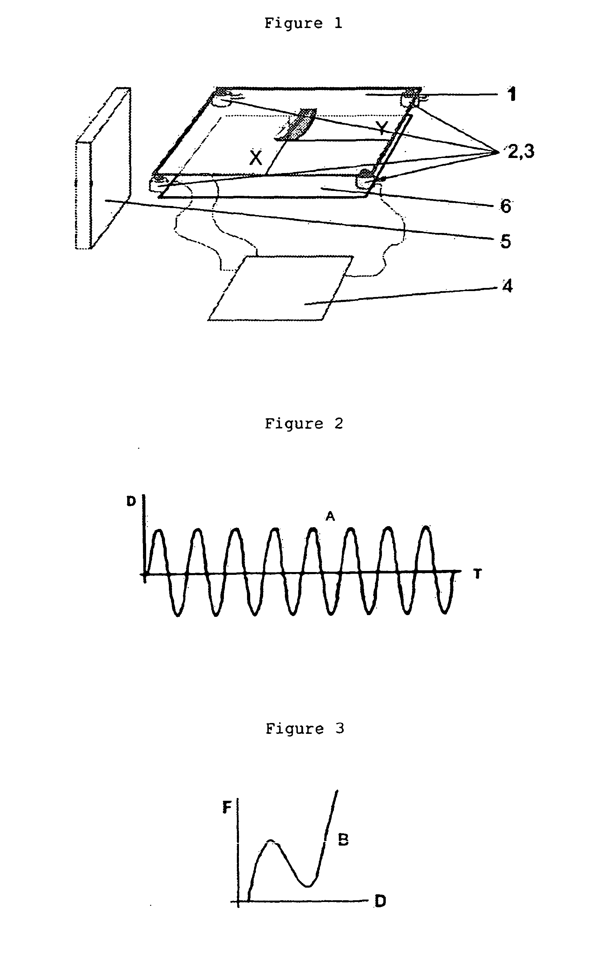

Le dispositif objet de la présente invention, comme le montre la figure 1, comprend les composants principaux suivants : une dalle tactile sensitive 1, un moyen de mise en mouvement 2 de ladite dalle tactile 1, un moyen d'analyse de la pression 3 exercée sur ladite dalle tactile 1, une unité de traitement et d'analyse 4, un corps de boîtier 5. On peut compléter le dispositif par un écran de visualisation 6.

La dalle tactile 1 est une dalle tactile classique de technologie quelconque. Lors d'un appui ou d'un contact sur sa surface plane, cet appui est détecté et les coordonnées X et Y du point d'appui sont déterminé par l'unité de traitement et d'analyse 4. L'opérateur peut toucher la dalle tactile 1 en tout point de sa surface. L'unité de traitement et d'analyse 4 se charge de localiser la position exacte.

Le moyen de mise en mouvement 2 est fixé entre le corps de boîtier 5 et la dalle tactile 1, qu'il relie l'un à l'autre. Il permet par sa déformation interne un déplacement relatif de la dalle tactile 1 par rapport au corps de boîtier 5. La fonction du moyen de mise en mouvement 2 consiste à faire varier en fonction du temps la distance ente son point de fixation sur la dalle tactile 1 et son point de fixation sur le corps de boîtier 5. Ceci peut être réalisé par la déformation du moyen de mise en mouvement 2. L'homme du métier connaît des actionneurs capables de cette fonction. Ceci produit ainsi un déplacement de la dalle tactile 1 relativement au corps de boîtier 5.

Le moyen d'analyse de la pression 3 est monté entre le corps de boîtier 5 et la dalle tactile 1. La fonction du moyen d'analyse de la pression 3 consiste à mesurer la pression exercée sur la dalle tactile 1, par exemple, par analyse de sa déformation propre. Cette pression mesurée au niveau du moyen d'analyse de la pression 3 est représentative de la force d'appui exercée par l'opérateur sur la dalle tactile 1.

Le déplacement de la dalle tactile 1 relativement au corps de boîtier 5 imposé par le moyen de mise en mouvement 2 est contrôlé par l'unité de traitement et d'analyse 4. Cette unité d'analyse et de traitement 4 est connectée d'une part au moyen de mise en mouvement 2 et d'autre part au moyen d'analyse de la pression 3.

Le déplacement ainsi produit peut être modulé en amplitude et/ou en fréquence en fonction du temps ou en fonction de la pression analysée par le moyen d'analyse de la pression 3 et qui est indicative de la force d'appui exercée par l'opérateur sur la dalle tactile 1.

L'unité de traitement et d'analyse 4 est capable d'asservissement et peut donc produire différents motifs de déplacement de la dalle tactile 1. On cite à titre d'illustration nullement limitatif, deux motifs de déplacement : le motif « sensation vibratoire » et le motif « effet tactile ».

Le motif « sensation vibratoire » a pour fonction de fournir un retour d'information à l'opérateur détectable par le sens du toucher, lors de l'appui sur la dalle tactile 1. Ce motif est obtenu en modulant le déplacement produit par le moyen de mise en mouvement 2 selon une modulation d'amplitude périodique en fonction du temps, selon une courbe de type A. La figure 2 donne un exemple de courbe, de type A, Déplacement (D) en fonction du Temps (T). Un tel déplacement a pour effet de produire une vibration de la dalle tactile 1 nettement détectable au toucher par l'opérateur lorsqu'il effectue un appui sur la dalle tactile 1. Ceci peut, par exemple, confirmer à l'opérateur la prise en compte de son action d'appui par l'unité de traitement et d'analyse 4. Il est bien évident que les deux paramètres amplitude et fréquence peuvent être réglables et variables et vont déterminer des qualités différentes de sensation de vibration. Ceci permet des perceptions modulables compréhensibles et discriminables par le sens du toucher.

Le motif « effet tactile » a pour objet de simuler par le dispositif objet de la présente invention le comportement d'un clavier tactile et notamment de reproduire l'effet de « clic » d'un clavier sensitif. Un tel clavier présente, par exemple, des touches à membranes déformables. Cette déformation s'effectue avec une résistance initiale à l'enfoncement, suivie, si l'enfoncement dépasse un certain seuil, d'un déplacement relativement plus important, pouvant le cas échéant s'accompagner d'un effet de « clic » sonore. Ensuite, la « touche » une fois enfoncée présente à nouveau une résistance à l'enfoncement. Ces sensations renseignent l'opérateur sur l'avancement de son action lors de l'appui sur une touche d'un tel clavier. Le motif « effet tactile » est obtenu en appliquant, sous la conduite de l'unité de traitement et d'analyse 4, par l'action du moyen de mise en mouvement 2 un comportement de déplacement particulier, selon la courbe de type B, à la dalle tactile 1. L'unité de traitement et d'analyse 4 asservit le déplacement selon une courbe, de type B, Force d'appui (F) en fonction du Déplacement (D) de la forme de celle de la figure 3. L'opérateur perçoit alors lors de son appui sur la dalle tactile 1 une résistance initiale :
- Zone 1 : Effort croissant en fonction du déplacement. Si l'opérateur continue son appui, passé un certain seuil d'enfoncement, il perçoit une diminution de l'effort résistant s'accompagnant d'un enfoncement sensible,
- Zone 2 : Effort faiblement croissant, voire décroissant en fonction du Déplacement. Si l'opérateur poursuit son action d'appui, il rencontre une nouvelle résistance,
- Zone 3 : Effort croissant en fonction du Déplacement.

Le dispositif objet de la présente invention ne se limite pas aux deux motifs « sensation vibratoire » et « effet tactile » tels que décrits ci-dessus, qui ne sont qu'illustratifs des possibilités de l'invention. Il est possible de mettre en oeuvre d'autres motifs combinés en fréquence vibratoire, en séquence temporelle, en effet tactile.

Le moyen de mise en mouvement 2 et le moyen d'analyse de la pression 3 peuvent être confondus dans un même organe capable des deux fonctions d'actionneur et de capteur.

Ces deux moyens confondu sont avantageusement réalisés par au moins un électro-aimant. Une réalisation particulière, présentée à titre d'exemple, consiste à utiliser un électro-aimant à chaque coin d'une dalle tactile rectangulaire, chacun de ces électro-aimants étant utilisé comme actionneur de mise en mouvement et comme capteur de pression.

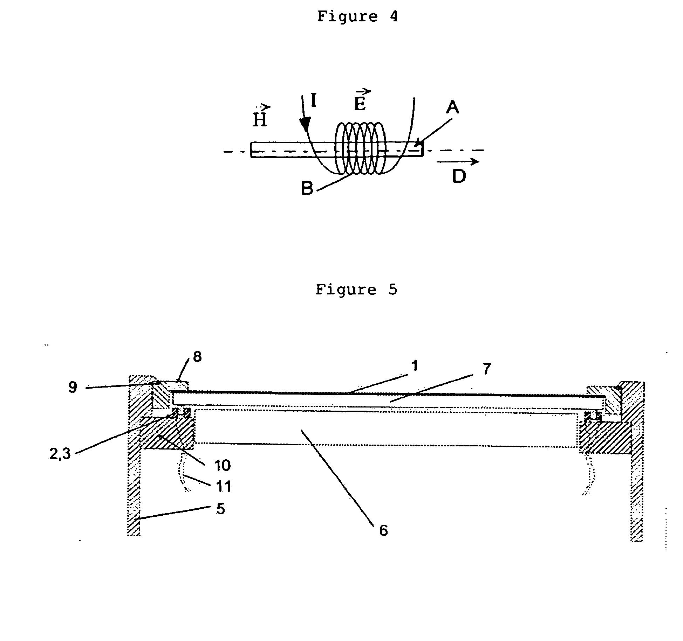

La figure 4 illustre le principe de la loi d'Ampère appliquée à un électro-aimant. Un courant électrique I traversant une bobine B, crée un champ électrique E et un champ magnétique H. Un actionneur A situé dans l'axe de la bobine B et mobile le long de cet axe est déplacé dans le champ magnétique H. Le déplacement D de l'actionneur A est fonction de l'intensité du courant I qui parcourt la bobine B. La vitesse de l'actionneur A est fonction de la fréquence du courant I qui parcourt la bobine B. Il est ainsi possible de commander le déplacement D de l'actionneur A relativement à la bobine B en agissant sur le courant I parcourant la bobine B. Il est aussi possible de mesurer l'effort s'opposant au déplacement D de l'actionneur A relativement à la bobine B en mesurant le courant I parcourant la bobine B. Ainsi si la bobine B est solidaire du corps de boîtier 5 (respectivement de la dalle tactile 1) et l'actionneur A est solidaire de la dalle tactile 1 (respectivement du corps de boîtier 5) on obtient un exemple de réalisation combinée d'un moyen de mise en mouvement 2 et d'analyse de la pression 3.

La figure 5 décrit un exemple de réalisation d'un dispositif selon l'invention. La vue est une coupe transversale du dispositif selon l'invention.

La dalle tactile 1 repose sur un support rigide et transparent 7. L'ensemble dalle tactile 1 et son support rigide et transparent 7 repose sur des électro-aimants 2, 3. Un cadre raidisseur 8 encadre la dalle tactile 1 par sa face supérieure de manière à appuyer la dalle tactile 1 et son support 7 contre les électro-aimants 2, 3. Le corps du boîtier 5 encadre le cadre raidisseur 8 et appuie sur sa face supérieure par l'intermédiaire d'un joint élastique 9 qui est ainsi comprimé. Les électro-aimants 2, 3 sont par une de leur extrémité, rigidement liés au corps de boîtier 5 par l'intermédiaire d'une pièce intermédiaire, le cadre support 10, qui assure par ailleurs la fixation de l'écran de visualisation 6. Ils sont par leur seconde extrémité en contact avec « l'ensemble tactile ». « L'ensemble tactile » est constitué de la dalle tactile 1, de son support rigide et transparent 7 et du cadre raidisseur 8.

A l'état repos, en l'absence d'appui de l'opérateur sur la dalle tactile 1, le joint élastique 9 est comprimé, ce qui par l'intermédiaire du cadre raidisseur 8, appuie sur la dalle tactile 1. Cette dernière repose et appuie sur son support 7, qui comprime les électro-aimants 2, 3. La dalle tactile 1 est alors en position basse.

« L'ensemble tactile » est mobile de bas en haut. Les signaux électriques envoyés par l'unité de traitement et d'analyse 4 (non représentée sur la figure 5, mais visible sur la figure 1) aux électro-aimants 2, 3 par l'intermédiaire des fils de commandes 11 permet de contrôler le mouvement dudit « ensemble tactile ». Le joint élastique 9 compressé permet le retour à l'état repos en l'absence de commande électrique.

L'unité de traitement et d'analyse 4 analyse en permanence la dalle tactile 1. Dès que l'opérateur appuie sur la dalle tactile 1, les coordonnées X et Y de la position d'appui sont relevées par l'unité de traitement et d'analyse 4. Ces coordonnées sont comparées avec des zones définissant des « touches » d'un clavier virtuel.

Si la position d'appui appartient à une zone « touche » prédéfinie, l'unité de traitement et d'analyse 4 qui contrôle les électro-aimants 2, enclenchera le motif « effet tactile » tel que décrits ci-dessus.

Si la position d'appui n'appartient pas à une zone « touche » prédéfinie, l'unité de traitement et d'analyse 4 qui contrôle les électro-aimants 2, 3 enclenchera le motif « sensation vibratoire » tel que décrits ci-dessus.

Les coordonnées interdites ou autorisées aux appuis sont déterminées par les logiciels d'application. Elles peuvent être modifiées dynamiquement en fonction du déroulement dudit logiciel et en fonction des interactions de l'opérateur.

Un écran de visualisation 6 est ici fixé par l'intermédiaire d'un cadre support 10 fixé solidairement au corps du boîtier 5.

On voit que le dispositif selon l'invention permet l'utilisation d'une dalle tactile dans un environnement ergonomique sévère en terme de vibrations/chocs, tels que postes de commandes embarqués sur véhicules. L'opérateur pourrait dans de tels environnements être perturbé dans son action de pointage. Le dispositif selon l'invention permet en ajoutant la modalité de retour d'effort perceptible par le toucher de compléter l'information en retour de l'opérateur et ainsi de sécuriser son action.

Le dispositif permet également de fournir à l'opérateur des informations distinctes selon la zone d'appui et de définir sur le mode perceptif du toucher des zones de comportement différent sur la surface de la dalle tactile. Dans certaines applications (cas du clavier virtuel, par exemple), par l'apport du retour de sensation tactile, on s'affranchit le cas échéant du retour visuel, ce qui permet d'envisager des dispositifs de dalle tactile non transparente.

On notera encore que les moyens d'analyse de la pression et de mise en mouvement 2 ne sont pas dans le champ utile de la dalle tactile 1 et ne nuisent pas à sa transparence. L'écran de visualisation 6 est situé en regard et en dessous de la dalle tactile 1. Ceci permet de combiner les apports d'informations à l'opérateur des modes tactiles et visuels.

Un autre avantage du dispositif selon l'invention est obtenu par le montage particulier décrit selon la figure 5. L'écran de visualisation 6 est fixé sur le corps de boîtier 5 par l'intermédiaire d'un cadre support 10. L'ensemble dit « visuel » constitué de l'écran de visualisation 6, son cadre support 10 et le corps de boîtier 5 est ainsi particulièrement rigide.

Le dispositif selon l'invention peut être interfacé avec un logiciel d'application. Les coordonnées interdites ou autorisées aux appuis, et plus généralement, l'association d'un motif de comportement tactile du dispositif à une zone de dalle tactile sont déterminées par les logiciels d'application. Elles peuvent être modifiées dynamiquement en fonction du déroulement dudit logiciel et/ou en fonction des interactions de l'opérateur. Ceci confère au dispositif objet de la présente invention une infinité de possibilités d'usage, une grande souplesse d'utilisation et une grande adaptabilité aux besoins.

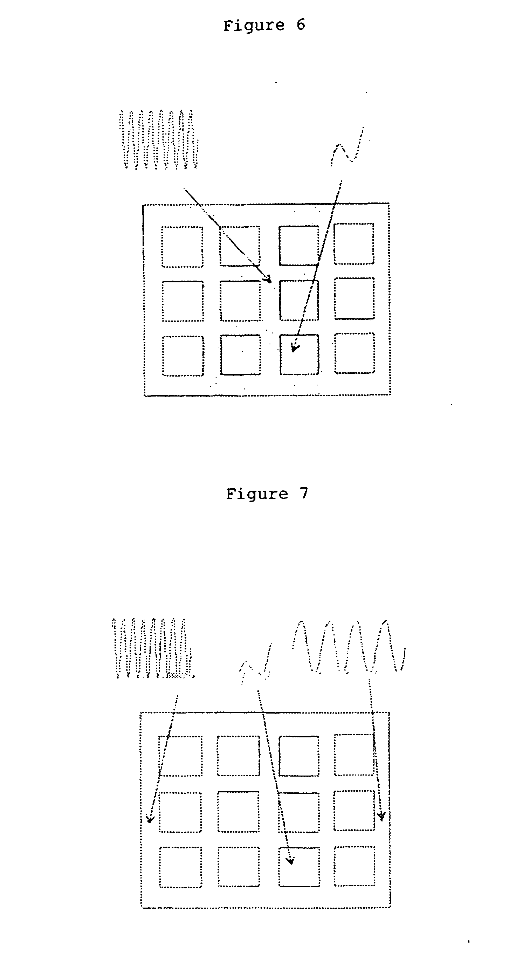

Un exemple de réalisation est illustré par la figure 6. Dans cet exemple le dispositif objet de la présente invention est utilisé pour réaliser un clavier virtuel. Sur la surface de la dalle tactile sont définies des zones d'appui autorisé ou touches virtuelles. Ces touches sont encadrées par une grille qui figure un guide doigt virtuel. Lors d'un appui sur une touche virtuelle un comportement « effet tactile » est produit. Lors d'un appui sur la grille, un comportement « sensation vibratoire » est produit. L'opérateur peut compter le nombre de colonnes et/ou de lignes sans nécessité d'une vision directe. Il peut localiser une touche dans l'espace 2D de la surface de la dalle tactile en comptant les vibrations. De plus, le comportement « effet tactile » des touches lui garantit que son appui ne sera pris en considération qu'après un certain enfoncement et non pas un simple contact sur la dalle tactile. Ceci sécurise la manoeuvre d'action sur une touche déterminée. Dans cet exemple de réalisation, on peut de plus placer un écran de visualisation. Ainsi l'information de l'opérateur peut être complétée par le mode visuel, en représentant les touches et la grille sur cet écran.

La figure 7 illustre une variante d'application de celle décrite précédemment. Dans ce cas, les bords gauche et droit du clavier virtuel sont repérés par une fréquence de vibration différente. L'opérateur peut ainsi mémoriser la position de son doigt sur la surface de la dalle tactile et réagir par rapport à son souhait sans vision directe. On peut étendre le principe pour distinguer chaque ligne et/ou colonne par un motif vibratoire particulier.

## Revendications

1. Dispositif d'interface homme machine comprenant une dalle tactile (1), un moyen de mise en mouvement (2), un moyen de mesure de la pression (3), une unité d'analyse et de traitement (4) reliée audits moyens (2, 3) et un corps de boîtier (5), une bobine traversée par du courant et solidaire du corps du boîtier, un actionneur solidaire de la dalle tactile et disposé dans l'axe de ladite bobine, des moyens de mesure du courant de ladite bobine et des moyens de commande du courant de ladite bobine, **caractérisé en ce que** le moyen de mise en mouvement (2) et le moyen de mesure de la pression (3) sont interposés entre la dalle tactile (1) et le corps de boîtier (5), la dalle tactile (1) étant mise en mouvement relativement au corps du boîtier (5) par le moyen de mise en mouvement (2) selon une courbe de déplacement en fonction de la pression d'appui mesurée par ledit moyen de mesure de la pression (3) afin de produire sur la dalle tactile (1) des effets détectables et différentiables au toucher, le moyen de mise en mouvement (2) et le moyen de mesure de la pression étant confondus.

2. Dispositif d'interface homme machine selon la revendication 1, **caractérisé en ce** le moyen commun de mise en mouvement (2) et le moyen de mesure de la pression (3) comprennent au moins un électro-aimant.

3. Dispositif d'interface homme machine selon la revendication 2, **caractérisé en ce que** le moyen de mise en mouvement (2) déplace la dalle tactile (1) selon une courbe de déplacement en fonction du temps, sous le contrôle de l'unité d'analyse et de traitement (4).

4. Dispositif d'interface homme machine selon la revendication 3, **caractérisé en ce que** le motif de déplacement de la dalle tactile (1) est du type «sensation vibratoire» obtenu en modulant le déplacement produit par le moyen de mise en mouvement (2) selon une modulation d'amplitude périodique en fonction du temps.

5. Dispositif d'interface homme machine selon la revendication 3, **caractérisé en ce que** le motif de déplacement de la dalle tactile (1) est du type «effet tactile» obtenu en asservissant le déplacement en fonction de l'effort selon une courbe (B) décomposable en trois zones; une première zone où moyen de mise en mouvement (2) exerce un effort (F) croissant en fonction du déplacement, une seconde zone où moyen de mise en mouvement (2) exerce un effort (F) décroissant en fonction du déplacement et une troisième zone où moyen de mise en mouvement (2) exerce un effort (F) croissant en fonction du déplacement.

6. Dispositif d'interface homme machine selon l'une quelconque des revendications précédentes, **caractérise en ce que** l'unité d'analyse et de traitement (4) interface la dalle tactile (1) est configurée pour produire un motif de mise en mouvement de la dalle tactile (1) déterminé en fonction de la zone d'appui sur la surface de la dalle tactile (1).

7. Dispositif d'interface homme machine selon l'une quelconque des revendications précédentes, **caractérisé en ce que** la dalle tactile (1) est disposée en avant d'un écran de visualisation (6).

## Claims

1. A man-machine interface comprising a touch faceplate (1), means (2) to impart movement, pressure measurement means (3), an analysis and processing unit (4) linked to said means (2, 3) and a casing body (5), a coil through which a current is passed and which is integral with the casing body, an actuator integral with the touch faceplate and arranged along the axis of said coil, means to measure the current in said coil and means to control the current in said coil, wherein the means (2) to impart movement and the pressure measurement means (3) are positioned between the touch faceplate (1) and the casing body (5), the touch faceplate (1) being made to move with respect to the casing body (5) by means (2) according to a displacement curve that depends on the pressing pressure measured by said pressure measurement means (3) so as to produce effects on the touch faceplate (1) that are detectable and distinguishable to the touch, the means (2) to impart movement and the pressure measurement means being merged.

2. A man-machine interface according to Claim 1, wherein the common movement (2) and pressure measurement (3) means comprise at least one electromagnet.

3. A man-machine interface according to Claim 2, wherein the movement means (2) displaces the touch faceplate (1) following a time-dependent displacement curve controlled by the analysis and processing unit (4).

4. A man-machine interface according to Claim 3, wherein the displacement motive of the touch faceplate (I) is of the "vibratory feeling" obtained by modulating the displacement produced by the movement means (2) according to a time-dependent periodic amplitude modulation.

5. A man-machine interface according to Claim 3, wherein the displacement motive of the touch faceplate (1) is of the "tactile effect" obtained by servo-controlling the displacement as a function of the stress according to a curve (B) that may be divided into three zones; a first zone where the movement means (2) exert a stress (F) that increases with the displacement, a second zone where the movement means (2) exerts a stress (F) that decreases with the displacement and a third zone where the movement means (2) exert a stress (F) that increases with the displacement.

6. A man-machine interface according to any one of the previous Claims, wherein the analysis and processing unit (4) interfaces the touch faceplate (1) and is configured so as to produce a displacement motive for the touch faceplate (1) that is determined according to the pressing zone on the surface of the touch faceplate (1).

7. A man-machine interface according to any one of the above Claims, wherein the touch faceplate (1) is arranged in front of a display screen (6).

## Patentansprüche

1. Vorrichtung zur Schnittstelle Mensch-Maschine, umfassend eine Platte (1) zum Berühren, ein Mittel zum Ingangsetzen (2), ein Mittel zum Messen des Drucks (3), eine Analyse- und Verarbeitungseinheit (4), die mit den genannten Mitteln (2, 3) verbunden ist, und einen Gehäusekörper (5), eine Spule, die von einem Strom durchflossen wird und die mit dem Gehäusekörper fest verbunden ist, ein Stellglied, das fest mit der Platte zum Berühren verbunden ist und in der Achse der genannten Spule angeordnet ist, Mittel zum Messen des Stroms der genannten Spule und Mittel zur Steuerung des Stroms der genannten Spule, **dadurch gekennzeichnet, dass** das Mittel zum Ingangsetzen (2) und das Mittel zum Messen des Drucks (3) zwischen der Platte zum Berühren (1) und dem Gehäusekörper (5) eingefügt sind, wobei die Platte zum Berühren (1) bezüglich dem Gehäusekörper (5) durch das Mittel zum Ingangsetzen (2) in Bewegung gesetzt wird entsprechend einer Bewegungskurve in Abhängigkeit vom Andrückdruck, der von dem genannten Mittel zum Messen des Drucks (3) gemessen wird, um auf der Platte zum Berühren (1) für den Tastsinn erfassbare und unterscheidbare Wirkungen zu erzeugen, wobei das Mittel zum Ingangsetzen (2) und das Mittel zum Messen des Drucks verschmolzen sind.

2. Vorrichtung zur Schnittstelle Mensch-Maschine nach Anspruch 1, **dadurch gekennzeichnet, dass** das gemeinsame Mittel zum Ingangsetzen (2) und das Mittel zum Messen des Drucks (3) wenigstens einen Elektromagneten umfassen.

3. Vorrichtung zur Schnittstelle Mensch-Maschine nach Anspruch 2, **dadurch gekennzeichnet, dass** das Mittel zum Ingangsetzen (2) die Platte zum Berühren (1) entsprechend einer Bewegungskurve in Abhängigkeit von der Zeit verschiebt, was von der Analyse- und Verarbeitungseinheit (4) kontrolliert wird.

4. Vorrichtung zur Schnittstelle Mensch-Maschine nach Anspruch 3, **dadurch gekennzeichnet, dass** das Bewegungsmuster der Platte zum Berühren (1) von der Art "vibrierende Empfindung" ist, die erzielt wird durch Modulieren der Bewegung, die vom Mittel zum Ingangsetzen (2) erzeugt wird, gemäß einer periodischen Amplitudenmodulation in Abhängigkeit von der Zeit.

5. Vorrichtung zur Schnittstelle Mensch-Maschine nach Anspruch 3, **dadurch gekennzeichnet, dass** das Bewegungsmuster der Platte zum Berühren (1) von der Art "fühlbare Wirkung" ist, die erzielt wird durch Triggern der Bewegung in Abhängigkeit der Kraft entsprechend einer Kurve (B), die in drei Zonen aufteilbar ist; eine erste Zone, in der das Mittel zum Ingangsetzen (2) eine in Abhängigkeit von der Bewegung ansteigende Kraft (F) ausübt, eine zweite Zone, in der das Mittel zum Ingangsetzen (2) eine in Abhängigkeit von der Bewegung abnehmende Kraft (F) ausübt und eine dritte Zone, in der das Mittel zum Ingangsetzen (2) eine in Abhängigkeit von der Bewegung steigende Kraft (F) ausübt.

6. Vorrichtung zur Schnittstelle Mensch-Maschine nach irgendeinem der vorhergehenden Ansprüche, **dadurch gekennzeichnet, dass** die Analyse- und Verarbeitungseinheit (4) zur Schnittstelle der Platte (1) zum Berühren ist und dafür ausgelegt ist, um ein festgelegtes Muster zum Ingangsetzen der Platte zum Berühren (1) in Abhängigkeit von der Auflagezone auf der Fläche der Platte zum Berühren (1) zu erzeugen.

7. Vorrichtung zur Schnittstelle Mensch-Maschine nach irgendeinem der vorhergehenden Ansprüche, **dadurch gekennzeichnet, dass** die Platte zum Berühren (1) vor einem Bildschirm (6) angeordnet ist.
